Europäisches Patentamt

European Patent Office

Office européen des brevets

(11) Numéro de publication: **0 102 866**
**B1**

# FASCICULE DE BREVET EUROPÉEN

(45) Date de publication du fascicule du brevet:
15.10.86

(51) Int. Cl.⁴: **H 04 N 13/04**

(21) Numéro de dépôt: 83401513.3

(22) Date de dépôt: 22.07.83

(54) Procédé d'affichage d'images animées en relief et dispositif de mise en oeuvre.

(30) Priorité: 29.07.82 FR 8213242

(43) Date de publication de la demande:
14.03.84 Bulletin 84/11

(45) Mention de la délivrance du brevet:
15.10.86 Bulletin 86/42

(84) Etats contractants désignés:
BE CH DE FR GB IT LI NL

(56) Documents cité:
FR-A-2 058 160
FR-A-2 400 812
US-A-3 046 330

RUNDFUNKTECHNISCHE MITTEILUNGEN, vol. 13,
no. 3, juin 1969, Hamburg (DE), N. MAYER et al.:
"Stereoskopisches Fernsehen", pages 123-134
SPIE 15TH ANNUAL TECHNICAL SYMPOSIUM
PROCEEDINGS, 14-17 septembre 1970, Anaheim, CA
(US), J.F. BUTTERFIELD: "Three dimensional
television", pages 3-9

(73) Titulaire: Guichard, Jacques, 8/10 rue des
Morillons, F-75015 Paris (FR)
Titulaire: Poirier, Alain, 82, rue de la République,
F-92190 Meudon (FR)

(72) Inventeur: Guichard, Jacques, 8/10 rue des
Morillons, F-75015 Paris (FR)
Inventeur: Poirier, Alain, 82, rue de la République,
F-92190 Meudon (FR)

(74) Mandataire: Mongrédien, André, c/o BREVATOME
25, rue de Ponthieu, F-75008 Paris (FR)

## Description

La présente invention a pour objet un procédé d'affichage d'images animées en relief et un dispositif mettant en oeuvre ce procédé. Elle trouve une application notamment dans la transmission d'images animées sur un réseau (commuté, de diffusion, a large bande, ou autre), et en particulier en visiophonie, c'est-à-dire en téléphonie accompagnée de transmission bilatérale d'images. L'invention trouve également une application dans la formation d'images animées en relief dans des systèmes de simulation, de jeux vidéo, etc... dans lesquels des images sont engendrées à partir de moyens informatiques.

La formation d'images animées en relief, notamment d'images de télévision, a déjà fait l'objet de nombreux travaux. Mais les solutions imaginées jusqu'à ce jour n'ont pas donné lieu à des réalisations satisfaisantes, car elles présentent toutes des inconvénients graves. La plus connue d'entre elles, qui s'apparente à une solution envisagée pour le cinématographe, consiste à munir le télespectateur de lunettes spéciales dont les deux verres, différents l'un de l'autre, permettent de voir sur l'écran du poste récepteur deux images différentes censées représenter les images qu'apercevraient respectivement l'oeil droit et l'oeil gauche de l'observateur. Cette nécessité pour le téléspectateur de porter des lumettes est naturellement un handicap sérieux qui a entravé le développement de cette technique.

Une autre solution a été imaginée qui est décrite dans le brevet français FR-A-1 543 994 délivré le 23 septembre 1968 pour "Procédé et dispositif pour la télévision en couleur et en relief intégral". Selon cette technique, il est fait usage, tant à la prise de vues qu'à la restitution de l'image, de deux trames orthogonales. A la prise de vues, la première trame est une trame lenticulaire d'analyse du relief; elle est composée de lentilles cylingriques verticales juxtaposées à dioptre concave. Ces lentilles produisent une pluralité d'images dans leur plan focal. La seconde trame est une trame lignée de sélection de couleur. Elle est placée dans le plan focal du réseau lenticulaire. La caméra de prise de vues analyse ainsi une image doublement tramée. A la réception, une première trame horizontale est constituée de lignes de phosphores aux couleurs alternées, ces lignes permettant de restituer une image en couleur. Une seconde trame composée de lentilles cylindriques verticales juxtaposées à dioptre convexe est placée devant la première. Le téléspectateur aperçoit alors l'image en couleur à travers cette trame lenticulaire, ce qui restitue le relief.

Un tel système présente l'inconvénient d'utiliser un tube cathodique dont le balayage n'est pas assez stable pour que les éléments d'image formés sur l'écran du tube puissent être alignés correctement et en permanence derrière le séparateur optique. Il en résulte une perte du relief suffisamment grave pour ruiner l'intérêt du système.

Une autre solution est décrite dans la demande de brevet français FR-A-2400812 intitulée "Dispositif de reproduction des images de télévision tridimensionnelles". Il s'agit encore d'utiliser une trame lenticulaire, mais celle-ci est accolée à un écran plan matriciel formant deux images imbriquées, l'une destinée à être vue par l'oeil droit et l'autre par 'oeil gauche.

Bien que ce dispositif donne satisfaction à certains égards, il faut reconnaître que les conditions d'observation des images ainsi formées restent encore assez délicates.

Les travaux des demandeurs sur ce sujet ont permis de mieux comprendre l'origine de ces difficultés. Il est apparu en effet que le confort de l'observation pouvait être amélioré considérablement si l'on rompait avec certains préjugés de l'art antérieur, le premier d'entre eux consistant à calquer la structure de l'écran sur celle de la trame lenticulaire sur laquelle il repose. En particulier, dans le dernier document cité le pas de l'écran est toujours égal au pas de la trame lenticulaire. Or, de façon surprenante, les inventeurs ont trouvé qu'il s'agissait là d'une des causes des mauvais résultats obtenus et que les images observées étaient de bien meilleure qualité si le pas de l'image formée derrière la trame lenticulaire était plus grand que celui de la trame.

De façon précise, l'invention a pour objet un procédé d'affichage d'images animées en relief, dans lequel on forme une image derrière une trame lenticulaire formée de lentilles cylindriques verticales à dioptre avant convexe, ces lentilles étant juxtaposées régulièrement avec un certain pas, cette trame possédant un plan focal dans lequel est formée l'image, cette image étant formée d'images imbriquées et étant constituée de lignes horizontales d'éléments d'affichage, les éléments d'affichage correspondant aux différentes images imbriquées étant placées côte à côte dans un ordre déterminé identique se répétant, les éléments d'affichage appartenant à des lignes différentes et correspondant à une même image imbriquée étant alignés verticalement, la distance séparant deux éléments d'affichage consécutifs d'une même ligne appartenant à la même image imbriquée constituant le pas de l'image, ce procédé étant caractérisé par le fait qu'on forme une image ayant un pas superieur au pas de la trame lenticulaire.

Pour obtenir ce résultat, on peut naturellement accoler à la trame lenticulaire un écran matriciel ayant un pas approprié. Mais l'invention prévoit une disposition plus commode qui consiste à séparer l'écran de la trame et à former de cet écran, par des moyens optiques appropriés, une image à l'arrière de la trame lenticulaire. Il est alors aisé de régler le pas de l'image à sa valeur optimale, pour obtenir les meilleurs résultats compte tenu des conditions d'observation. L'invention donne donc une grande souplesse au dispositif d'affichage.

Un deuxième préjugé de l'art antérieur consistait à croire que les images droite et gauche devaient être constituées d'éléments d'affichage obtenus par tout ou rien, c'est-à-dire soit noirs, soit blancs. Les inventeurs ont montré, au contraire, que la formation d'images en demi-teintes permettait d'améliorer de manière surprenante la qualité des images observées, et que cette disposition était indispensable pour les images naturelles.

Un troisième préjugé de l'art antérieur consistait à croire que le nombre d'éléments d'affichage associés à chaque lentille devait être pair (par exemple 2 ou 4). Cela résultait justement de la symétrie imposée par l'égalité des pas de la trame lenticulaire et de l'image. Selon l'invention un nombre quelconque d'éléments d'affichage peut être employé, notamment un nombre impair.

L'invention prévoit également diverses dispositions avantageuses concernant la formation des différents signaux nécessaires à la commande de l'écran matriciel. Aucune de ces dispositions n'était prévue dans l'art antérieur cité plus haut.

Dans une première variante on effectue une prise de vues multiple sous plusieurs angles différents. Les signaux résultant de cette prise de vues sont transmis (soit séparément, soit par multiplexage, soit par codage) vers un poste récepteur. Lorsque les signaux sont transmis par codage, l'un d'entre eux peut être transmis de manière complète et les autres par l'écart qu'ils présentent par rapport au signal complet, de manière à réduire la quantité d'informations transmises.

La prise de vues multiple peut être obtenue soit par plusieurs caméras (par exemple deux ou plus), soit par une seule caméra, à condition qu'elle soit munie de moyens optiques (miroirs, lame semitransparente, séparateur optique, etc...) permettant de définir des angles différents de prise de vues.

Dans une seconde variante, les signaux de commande sont engendrés par des moyens informatiques aptes à calculer des groupes d'images successives (image droite et image gauche), lesquelles sont stockées dans une mémoire d'images puis lues lors de l'affichage. Ces moyens peuvent consister en un microprocesseur ou un ordinateur.

L'invention a également pour objet un dispositif qui met en oeuvre le procédé qui vient d'être défini. Ce dispositif se caractérise par l'existence d'une image formée dans le plan focal de la trame lenticulaire, cette image présentant un pas supérieur à celui de la trame.

Dans une première variante, l'écran d'affichage permettant d'obtenir cette image est dans le plan focal de la trame lenticulaire.

Dans une seconde variante l'écran est séparé de la trame et des moyens optiques projettent l'image de cet écran sur le plan focal de la trame.

Dans un premier mode de réalisation, il existe des moyens pour effectuer une prise de vues multiple sous des angles différents. Cette prise de vues peut être obtenue par deux caméras. L'écran comporte alors deux familles d'éléments d'affichage. Mais on peut aussi utiliser un nombre de familles d'éléments supérieur au nombre de caméras. Dans ce cas il faut reconstituer des images intermédiaires à partir des signaux délivrés par les caméras.

Dans un second mode de réalisation, il n'existe pas de caméras de prise de vues mais des moyens informatiques aptes à calculer des images, à les mémoriser et à les lire.

Quel que soit le mode de formation des signaux de commande, l'écran d'affichage peut être à cristaux liquides, car ce type d'écran est bien adapté à la réalisation d'une structure matricielle et de plus il permet d'obtenir des demi-teintes.

L'aspect matriciel de l'écran d'affichage peut se combiner avantageusement au caractère matriciel de certains moyens photosensibles utilisés à la prise de vues dans la variante qui fait appel à celle-ci. On sait en effet qu'il existe des caméras utilisant des rétines à état solide formées d'une mosaïque d'éléments photosensibles. De telles caméras conviennent donc bien à la mise en oeuvre de l'invention.

De toute façon, les caractéristiques de l'invention apparaîtront mieux après la description qui suit, d'exemples de réalisation donnés à titre explicatif et nullement limitatif. Cette description se réfère à des dessins annexés sur lesquels:

- la figure 1 représente le schéma général d'un dispositif selon l'invention à prise de vues multiple,

- la figure 2 représente, en coupe, une lentille cylindrique avec ses deux éléments d'affichage associés,

- la figure 3 représente, en coupe, un écran d'affichage matriciel avec sa trame lenticulaire,

- la figure 4 représente, en vue de front, ce même écran,

- la figure 5 représente deux signaux vidéofréquence et un signal multiplexé,

- la figure 6 représente un mode de réalisation d'un système de visiophonie utilisant l'invention,

- la figure 7 représente un schéma correspondant à la variante où les images sont calculées par des moyens informatiques.

La description qui suit, se rapporte au cas où le moyen de prise de vues comporte deux caméras et où l'image formée comporte deux éléments d'affichage. Mais, comme indiqué plus haut, on pourrait utiliser une image possèdant un plus grand nombre d'éléments d'affichage associés à chaque lentille, (une dizaine par exemple), et également un moyen de prise de vues à plus de deux caméras. Le cas qui va être décrit n'est donc qu'un exemple.

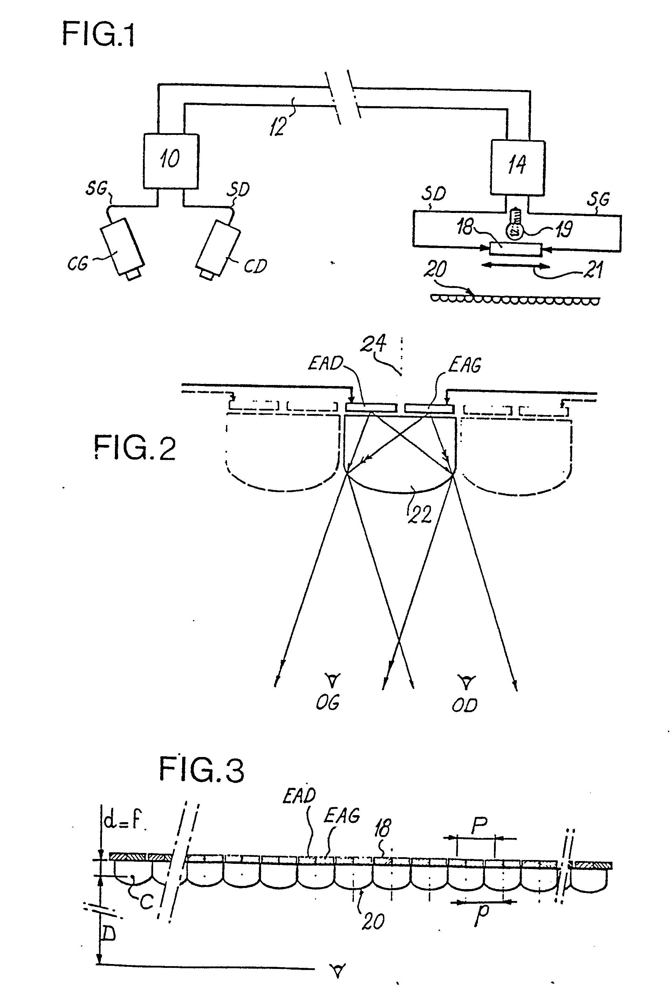

Le dispositif représenté sur la figure 1 comprend deux caméras de prise de vues, respectivement droite CD et gauche CG, qui délivrent deux signaux vidéofréquence SD et SG, un circuit de traitement de signal d'émission 10, une ligne de transmission 12, un circuit de traitement de signal de réception 14, un écran matriciel 18 commandé par deux connexions véhiculant respectivement les signaux SD et SG et une trame lenticulaire 28 composée de lentilles cylindriques verticales juxtaposées à dioptre avant convexe. Entre l'écran 18 et la trame 20 on trouve une optique 21 servant à former l'image de l'écran sur le plan focal de la trame; cette image est projetée grâce à une lampe 19 située derrière l'écran.

Selon la caractéristique essentielle de l'invention le pas de l'image ainsi formée est supérieur au pas de la trame. En pratique l'écart △P de ces pas, relativement à la valeur moyenne P de ces pas, est de l'ordre de $10^{-2}$ à $10^{-3}$.

Le fonctionnement de ce dispositif est le suivant. La scène à transmettre est prise par les deux caméras CD, CG sous deux angles différents. Les deux signaux vidéofréquence sont, de manière classique, formés d'une séquence de signaux de ligne représentant la variation d'intensité lumineuse le long d'une ligne de l'image projetée sur la partie photosensible du dispositif de prise de vues, ces signaux étant calés par rapport à des impulsions de synchronisation. Si les deux signaux délivrés par les caméras sont transmis indépendamment l'un de l'autre (par exemple sur deux lignes indépendantes), le circuit 10 est inutile. Mais ces signaux peuvent être transmis par multiplexage, auquel cas le circuit 18 est un multiplexeur, comme on le verra mieux à propos de la figure 5. Le circuit 14 est chargé de restituer des signaux SD, SG pour la commande de l'écran d'affichage 18 et d'effectuer les interpolations si nécessaire.

La structure et le fonctionnement de ce dispositif sont illustrés par les figures 2, 3, 4. Sur la figure 2 tout d'abord, on voit, en coupe transversale, une lentille cylindrique 22 dans le plan focal de laquelle sont formés deux éléments d'image. Au centre de la trame ces deux éléments sont disposés de part et d'autre du plan médian 24. Il peut s'agir soit d'un élément d'affichage si l'écran est plaqué contre la trame (ce qui est le cas illustré) soit d'un élément d'image si l'écran est séparé de la trame. L'élément disposé à gauche du plan médian correspond à une image aperçue par l'oeil droit OD du spectateur; cet élément est donc désigné par "élément d'affichage droit" ou EAD. Inversement, l'élément situé à droite du plan médian est vu par l'oeil gauche OG du spectateur; il est désigné par "élément d'affichage gauche" ou EAG.

Une ligne de l'image projetée ou de l'écran matriciel d'affichage comprend donc, comme illustré sur la figure 3, 2N éléments alternativement gauche et droit, si N est le nombre de lentilles.

Sur la figure 3 on observé aux deux extrémités de la trame l'effet dû à la différence de pas des deux structures: comme le pas de l'image est supérieur à celui de la trame les éléments d'image se trouvent décentrés par rapport à chaque lentille et c'est grâce à cet effet que l'observation du relief est améliorée.

Ce point peut être précisé à l'aide de la figure 3, qui montre le pas P de l'image, le pas p de la trame, la distance D entre l'oeil de l'observateur et le centre optique C des lentilles, la distance d entre ce centre et le plan focal de la trame, distance qui est d'ailleurs égale à la distance focale f des lentilles. Selon l'invention, les pas P et p sont reliés par la relation:

$$\frac{P}{p} = \frac{D+d}{D}$$

soit encore

$$P = p \ (1 + \frac{d}{D}).$$

En pratique D varie entre environ 68 et 200 cm et d entre 0,3 et 3 cm. Le rapport d/D varie donc entre $1,5.10^{-3}$ et $5.10^{-2}$. C'est dans cette marge que se trouve aussi le rapport P/p des pas.

Bien que ce rapport puisse paraître faible, il faut comprendre que lorsque l'image formée comprend plusieurs éléments imbriqués (par exemple 30) la précision demandée au séparateur optique que constitue la trame est extrême. Dans l'art antérieur, l'erreur de parallaxe commise du fait de l'égalité des pas entraînait une erreur due au fait que l'oeil droit apercevait des éléments d'image destinés en réalité à l'oeil gauche et vice-versa. On était donc contraint de n'utiliser des images qu'à faible résolution (par exemple deux éléments imbriqués). Avec l'invention le nombre d'images imbriquées peut être beaucoup plus élevé (30 et plus).

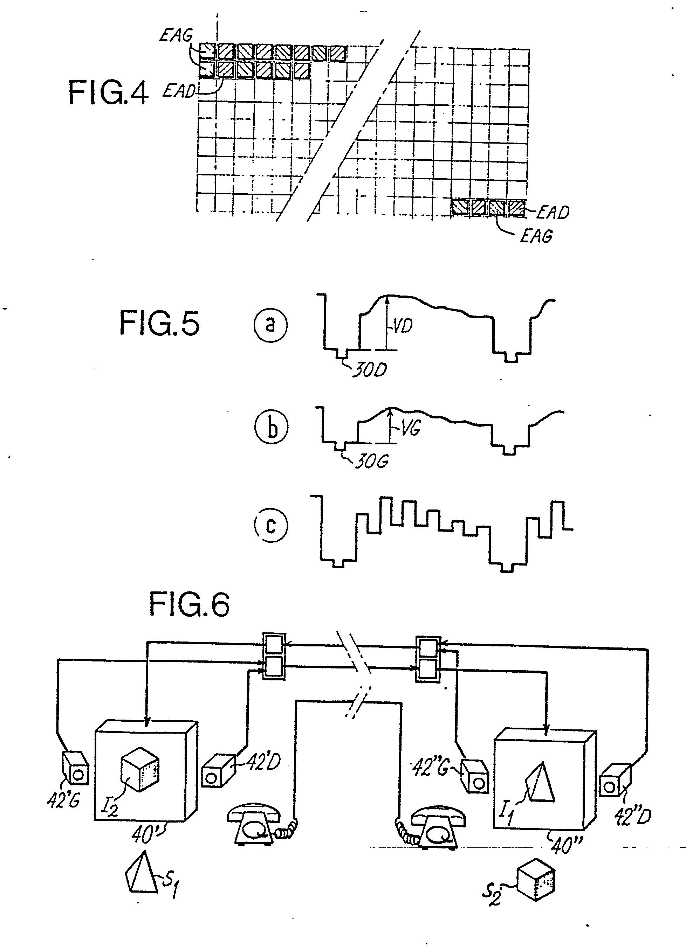

La forme de l'image projetée ou de l'écran apparaît sur la figure 4. Si l'écran est plaqué sur la trame il possède à peu près les dimensions de celle-ci. S'il est séparé de la trame il peut être plus petit que celle-ci, l'optique de projection ayant alors un grandissement supérieur à 1 et réglable.

Chaque ligne de l'écran, qu'il soit sur la trame ou séparé de celle-ci, est commamdée par un signal provenant des caméras de prise de vues, selon des principes généraux classiques, si ce n'est que, en l'occurrence, il existe deux familles d'éléments imbriquées. De façon générale, la commande d'un écran d'affichage matriciel à cristaux liquides est bien connue de l'homme de l'art et ne sera donc pas décrite ici. Il suffit de rappeler que les bandes croisées constituant les électrodes d'un tel écran sont portées séquentiellement à des potentiels appropriés pour que le champ électrique qui en résulte soit apte à orienter convenablement les molécules du cristal liquide. On peut utiliser par exemple des cristaux liquides présentant une biréfringence commandée électriquememt et disposés entre un polariseur et un analyseur croisés. Un tel dispositif permet d'obtenir des demi-teintes (quelques dizaines de teintes de gris) ce qui est particulièrement utile dans l'application en question, comme souligné plus haut.

Dans le cas de l'invention, chaque électrode en colonne est associée à des éléments d'affichage destinés à être vus par l'oeil gauche ou par l'oeil droit. Les colonnes de type gauche et droite alternent donc. Pour commander les éléments d'une ligne déterminée, il faut donc appliquer sur l'électrode en ligne correspondante un certain potentiel et sur les électrodes en colonne les signaux correspondant aux signaux de ligne (SD, SG) émanant alternativement de la caméra droite (CD) et de la caméra gauche (CG).

La figure 5 illustre la forme que peuvent prendre ces signaux. En (a) on reconnaît la forme typique d'un signal de ligne, avec l'impulsion de synchronisation 30D suivie d'un niveau de tension d'amplitude VD représentant la variation d'intensité lumineuse le long de la ligne analysée. Il s'agit du signal délivré par la caméra droite.

La ligne (b) représente les mêmes éléments 30G, VG, pour la caméra gauche.

La ligne (c) illustre un signal multiplexé où alternent des impulsions traduisant les tensions VD et VG. Ce multiplexage peut être effectué par le circuit 10 de la figure 1, auquel cas le circuit 14 est inutile car la suite des impulsions de tension constituant le signal multiplexé peut constituer (après amplification) la suite de tensions à appliquer sur les électrodes en colonne de l'écran d'affichage. En revanche, si le circuit 10 n'existe pas et si les deux signaux vidéofréquence sont transmis séparément, il faut, à la réception, former les signaux qui, alternativement, exciteront les électrodes en colonne droite et gauche. C'est alors le rôle du circuit 14.

Naturellement on peut utiliser d'autres types de multiplexage, par exemple en procédant ligne par ligne ou trame par trame.

Les travaux des demandeurs ont également montré qu'il est important que les signaux de prises de vues soient équilibrés de manière rigoureuse (à quelques pourcents près). Les caméras doivent donc être associées à des moyens permettant d'équilibrer les niveaux des signaux qu'elles délivrent (signaux a et b de la figure 5). De tels moyens d'équilibrage sont classiques en technique de prise de vues vidéo.

Par ailleurs, les caméras peuvent être synchronisées.

Lorsque le nombre d'éléments d'affichage associés à chaque lentille excède celui des caméras, il est nécessaire de composer électroniquement des images complémentaires. De préférence, cette composition s'effectue dans le récepteur, ce qui évite d'avoir à transmettre les signaux correspondant aux images complémentaires. On peut ainsi, à partir de deux images droite et gauche, saisies par deux caméras, définir la distance des points de la scène transmise puis restituer par combinaison des signaux d'images autant d'images souhaitées correspondant à différents points de vue. Toutes ces images sont imbriquées sur l'écran matriciel. L'observateur a alors la latitude de modifier son angle d'observation.

La figure 6 illustre l'aspect que peut prendre un système de visiophonie à deux caméras, conformément à l'invention. Deux récepteurs 40', 40'' sont encadrés chacun par deux caméras 42'G, 42'D d'une part et 42''G, 42''D d'autre part. Les récepteurs sont reliés aux caméras à travers le même réseau de télécommunication. L'intérêt de cette disposition est d'éviter l'erreur de parallaxe que commettent tous les dispositifs de l'art antérieur sans relief à une seule caméra, sans utilisation de miroir. Naturellement, on pourrait utiliser, au lieu de deux caméras, un seul moyen de prise de vues, à condition qu'il puisse effectuer deux prises de vues sous deux angles différents de part et d'autre de chaque récepteur (par exemple une caméra associée à des miroirs ou des prismes).

Naturellement, une transmission en couleur peut être obtenue, par l'utilisation à la prise de vues, de caméras trichromes et, à la restitution, de filtres colorés trichromes.

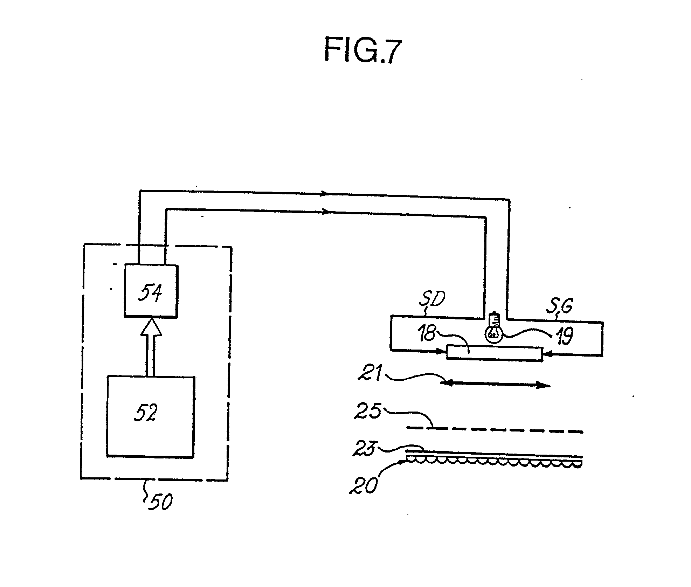

La figure 7 illustre schématiquement la structure d'un dispositif conforme à l'invention selon la seconde variante, qui utilise des moyens de calcul des images. Le dispositif d'affichage est représenté dans une variante correspondant à l'utilisation de moyens de projection mais pourrait utiliser un écran accolé à la trame lenticulaire. Tel que représenté, il comprend, comme pour la figure 1, un écran matriciel 18 commandé par deux connexions véhiculant respectivement des signaux SD et SG, une lampe de projection 19, un réseau lenticulaire 20 composé de lentilles cylindriques et une optique 21. L'originalité de cette variante, par rapport à la première, tient en ce que les signaux SD et SG sont engendrés par des moyens informatiques schématisés par le bloc 50. Ces moyens comprennent un calculateur d'images 52, constitué notamment d'un microprocesseur, et une mémoire d'images 54. Le calculateur 52 délivre à la mémoire des images droite et gauche aptes à restituer l'impression de relief. Ces images sont ensuite lues dans la mémoire et les signaux de lecture constituent les signaux SD et SG nécessaires à l'affichage.

Les moyens 50 ne seront pas décrits ici car ils sont connus de l'homme de l'art. On pourra se reporter à ce sujet à l'ouvrage intitulé: "La réalisation des logiciels graphiques interactifs" publié chez Eyrolles, 1981.

Selon les conditions d'exploitation de l'invention, il peut être intéressant d'ajouter un écran diffusant dans le plan focal de la trame 20, comme illustré sur la figure 7 sous la forme de l'élément 23.

Il peut également être utile d'insérer entre la cellule à cristal liquide 18 et la trame 20 un filtre d'amplitude (25 sur la figure 7) formé de bandes plus ou moins opaques et présentant un pas adapté à celui de l'image. Le but de cet écran est d'adoucir les transitions entre les différents éléments d'affichage. Cette dernière disposition est surtout utile lorsqu'on emploie plus de deux éléments d'image derrière chaque lentille.

A titre explicatif, il peut être indiqué que les demandeurs ont réalisé un appareil conforme à l'invention avec une cellule à cristaux liquides de 256x256 cellules présentant 32 degrés de gris et une trame lenticulaire de 125 lentilles, revêtue, dans son plan focal, d'un écran diffusant. La surface de la cellule è cristaux liquides était de 2 cm² et celle de la trame lenticulaire variait de quelques cm² à 20x20 cm². La surface de la trame dépend de la puissance de la lampe qui sert à projeter l'image de la cellule sur la trame lenticulaire. Dans une pièce normalement éclairée, la trame peut avoir normalement une dimension de 10x10 cm². L'écran diffusant avait une épaisseur inférieure à 0,1 mm. L'objectif possédait une focale de 80 mm.

## Revendications

1. Procédé d'affichage d'images animées en relief, dans lequel on forme une image derrière une trame lenticulaire formée de lentilles cylindriques verticales à dioptre avant convexe, ces lentilles étant juxtaposées régulièrement avec un certain pas, cette trame possédant un plan focal dans lequel est formée l'image, cette image étant formée d'images imbriquées et étant constituée de lignes horizontales d'éléments d'affichage, les éléments d'affichage correspondant aux différentes images imbriquées étant placés côte à côte dans un ordre déterminé identique se répétant, les éléments d'affichage appartenant à des lignes différentes et correspondant à une même image imbriquée étant alignés verticalement, la distance séparant deux éléments d'affichage consécutifs d'une même ligne appartenant à la même image imbriquée constituant le pas de l'image, caractérisé par le fait qu'on forme une image ayant un pas supérieur au pas de la trame lenticulaire.

2. Procédé selon la revendication 1, caractérisé en ce que l'image formée derrière la trame lenticulaire est obtenue à l'aide d'un écran matriciel disposé dans le plan focal de la trame lenticulaire.

3. Procédé selon la revendication 1, caractérisé en ce que pour former l'image dans le plan focal de la trame, on forme une première image sur un écran matriciel séparé de la trame et on projette cette image sur le plan focal de la trame.

4. Procédé selon l'une quelconque des revendications 1 à 3, caractérisé en ce qu'on forme une image en demi-teinte.

5. Procédé selon la revendication 1, caractérisé en ce qu'on effectue une prise de vues multiple à l'aide d'au moins une caméra, les prises de vues étant effectuées sous des angles différents, en ce qu'on transmet les signaux résultant de cette prise de vues et on commande chacune des images imbriquées formant l'image par l'un des signaux transmis.

6. Procédé selon la revendication 5, caractérisé en ce qu'on transmet les signaux délivrés par le moyen de prise de vues par multiplexage dans le temps.

7. Procédé selon la revendication 5, caractérisé en ce qu'on transmet les signaux délivré les moyens de prise de vues par codage, l'un des signaux etant transmis de manière complète, les autres étant transmis par l'écart qu'ils présentent par rapport au signal complet.

8. Procédé selon la revendication 5, caractérisé en ce qu'on effectue deux prises de vues selon deux angles différents.

9. Procédé selon la revendication 8, caractérisé en ce que l'image est formée de deux images imbriquées.

10. Procédé selon la revendication 5, caractérisé en ce que le nombre de prises de vues effectuées est inférieur au nombre d'images imbriquées formant l'image et en ce qu'on élabore des images complémentaires en combinant les signaux correspondant aux prises de vues effectuées et en ce qu'on affiche ces images complémentaires avec les images correspondant aux prises de vues effectuées.

11. Procédé selon l'une quelconque des revendications 5 à 10, caractérisé en ce qu'on transmet les signaux de prises de vues à travers un réseau de transmission.

12. Procédé selon la revendication 11, caractérisé en ce que le réseau de transmission est un réseau commuté.

13. Procédé selon la revendication 11, caractérisé en ce que le réseau de transmission est un réseau de diffusion.

14. Procédé selon la revendication 1, caractérisé en ce qu'on calcule les signaux de commande des images constituant l'image par des moyens informatiques (52, 54).

15. Dispositif d'affichage d'images animées en relief, pour la mise en oeuvre du procédé selon la revendication 1, ce dispositif comprenant au moins un récepteur comprenant un moyen d'affichage d'une image derrière une trame lenticulaire (20) formée de lentilles cylindriques verticales (22) juxtaposées à dioptre avant convexe, ces lentilles ayant un plan focal et un plan médian (24), l'image étant formée dans ledit plan focal, caractérisé en ce que l'image possède un pas qui est supérieur à celui de la trame lenticulaire.

16. Dispositif selon la revendication 15, caractérisé en ce qu'il comprend un écran d'affichage (18) disposé dans le plan focal de la trame lenticulaire (20).

17. Dispositif selon la revendication 16, caractérisé en ce que l'écran d'affichage (18) est séparé de la trame lenticulaire (20) et en ce qu'il comprend des moyens optiques (19, 21) pour former une image de cet écran dans le plan focal de la trame lenticulaire (20).

18. Dispositif selon la revendication 15, caractérisé en ce qu'il comprend un moyen de prise de vues à au moins une caméra (CD, CG) apte à effectuer une prise de vues multiple sous des angles différents, chaque famille d'éléments d'affichage étant commandée par l'un des signaux (SD, SG) correspondant à l'une des prises de vues.

19. Dispositif selon la revendication 18, caractérisé en ce que le moyen de prises de vues comprend deux caméras orientées selon deux directions différentes.

20. Dispositif selon la revendication 19 caractérisé en ce qu'il comprend un premier récepteur (40') relié à travers un réseau de télécommutations à un premier moyen de prise de vues et un second récepteur relié à travers le même réseau de télécommunications à un second moyen de prise de vues, le premier moyen de prise de vues étant apte à effectuer deux prises de vues sous deux angles différents de part et d'autre du second récepteur et le second moyen de prise de vues étant apte à effectuer deux prises de vues sous deux angles différents de part et d'autre du premier récepteur.

21. Dispositif selon la revendication 20, caractérisé en ce que le premier et le second moyens de prise de vues sont constitués chacun par deux caméras (42'G, 42'D et 42"G, 42"D) encadrant l'un des récepteurs.

22. Dispositif selon l'une quelconque des revendications 18 à 21, caractérisé en ce que le dispositif de prise de vues est suivi d'un multiplexeur (10).

23. Dispositif selon l'une quelconque des revendications 18 à 22, caractérisé en ce que chaque caméra est du type à analyseur matriciel à état solide.

24. Dispositif selon l'une quelconque des revendications 18 à 23, caractérisé en ce que les différentes caméras sont munies de moyens permettant d'équilibrer les niveaux des signaux qu'elles délivrent.

25. Dispositif selon la revendication 15, caractérisé en ce qu'il comprend des moyens informatiques (50) aptes à calculer des images et à former des signaux de commande de l'écran matriciel.

26. Dispositif selon l'une quelconque des revendications 15 à 25, caractérisé en ce que l'écran matriciel est apte à restituer des demi-teintes.

27. Dispositif selon l'une quelconque des revendications 15 à 26, caractérisé en ce que l'écran matriciel est un écran à cristaux liquides.

28. Dispositif selon l'une quelconque des revendications 17 à 27, caractérisé en ce qu'il comprend un écran diffusant (23) dans le plan focal de la trame lenticulaire.

29. Dispositif selon l'une quelconque des revendications 17 à 28, caractérisé en ce qu'il comprend un filtre d'amplitude (25) entre l'écran et la trame, formé de bandes opaques.

## Patentansprüche

1. Verfahren zum Anzeigen dreidimensionaler bewegter Bilder, bei welchem man ein Bild hinter einem Linsenrasterschirm ausbildet, der aus vertikalen zylindrischen Linsen mit nach vorn konvexem Diopter besteht, wobei diese Linsen mit einem gewissen Rasterabstand regelmäßig benachbart sind, dieser Rasterschirm eine Brennebene besitzt, in der das Bild ausgebildet wird, welches Bild aus sich überlappenden Bildern ausgebildet ist und aus horizontalen Zeilen von Anzeigeelementen besteht, die Anzeigeelemente, die unterschiedlichen sich überlappenden Bildern entsprechen, Seite an Seite in einer bestimmten, identischen, sich wiederholenden Reihenfolge angeordnet sind, die Anzeigeelemente, die unterschiedlichen Zeilen zugehören und demselben überlappten Bild angehören, vertikal ausgerichtet sind, die Distanz, die zwei aufeinanderfolgende Anzeigeelemente derselben Zeile, die demselben überlappten Bild angehört, voneinander trennt, den Rasterabstand des Bildes bildet, gekennzeichnet durch die Tatsache, daß man ein Bild mit einem Raster ausbildet, das größer als das Raster des Linsenrasterschirmes ist.

2. Verfahren nach Anspruch 1, dadurch gekennzeichnet, daß das Bild, das hinter dem Linsenrasterschirm ausgebildet wird, mit Hilfe eines Matrixschirms erhalten wird, der in der Brennebene des Linsenrasterschirms angeordnet ist.

3. Verfahren nach Anspruch 1, dadurch gekennzeichnet, daß man zur Ausbildung des Bildes in der Brennebene des Rasterschirms ein erstes Bild auf einem von dem Rasterschirm getrennten Matrixschirm ausbildet und man dieses Bild auf die Brennebene des Rasterschirms überträgt.

4. Verfahren nach einem der Ansprüche 1 bis 3, dadurch gekennzeichnet, daß man ein Bild in Halbton ausbildet.

5. Verfahren nach Anspruch 1, dadurch gekennzeichnet, daß man eine Aufnahme mit mehreren Ansichten mit Hilfe wenigstens einer Kamera durchführt, wobei die Aufnahmen der Ansichten unter unterschiedlichen Winkeln ausgeführt werden, daß man die von dieser Aufnahme von Ansichten resultierenden Signale überträgt und daß man jedes der bilderzeugenden sich überlappenden Bilder durch das eine der übertragenen Signale steuert.

6. Verfahren nach Anspruch 5, dadurch gekennzeichnet, daß man die Signale, die durch die Aufnahmeeinrichtung geliefert werden, durch Zeitmultiplexen überträgt.

7. Verfahren nach Anspruch 5, dadurch gekennzeichnet, daß man die Signale, die von der Aufnahmeeinrichtung geliefert werden, durch Kodierung überträgt, wobei eines der Signale vollständig übertragen wird, während die anderen mit dem Abstand übertragen werden, den sie gegenüber dem vollständigen Signal aufweisen.

8. Verfahren nach Anspruch 5, dadurch gekennzeichnet, daß man zwei Aufnahmen unter zwei unterschiedlichen Winkeln durchführt.

9. Verfahren nach Anspruch 8, dadurch gekennzeichnet, daß das Bild aus zwei sich überlappenden Bildern zusammengesetzt wird.

10. Verfahren nach Anspruch 5, dadurch gekennzeichnet, daß die Anzahl der ausgeführten Aufnahmen kleiner als die Anzahl der sich überlappenden Bilder ist, die das Bild ausbilden, und daß man Komplementärbilder ausarbeitet, indem man die den ausgeführten Aufnahmen entsprechenden Signale kombiniert und daß man diese Komplementärbilder mit den Bildern anzeigt, die den ausgeführten Aufnahmen entsprechen.

11. Verfahren nach einem der Ansprüche 5 bis 10, dadurch gekennzeichnet, daß man die Signale der Aufnahmen über ein Übertragungsnetz überträgt.

12. Verfahren nach Anspruch 11, dadurch gekennzeichnet, daß das Übertragungsnetz ein geschaltetes Netz ist.

13. Verfahren nach Anspruch 11, dadurch gekennzeichnet, daß das Übertragungsnetz ein Verteilungsnetz ist.

14. Verfahren nach Anspruch 1, dadurch gekennzeichnet, daß man die Steuersignale der das Bild ausbildenden Bilder durch Informatikeinrichtungen (52, 54) berechnet.

15. Anzeigeeinrichtung für dreidimensionale bewegte Bilder zur Durchführung des Verfahrens nach Anspruch 1, wobei die Einrichtung wenigstens einen Empfänger enthält, der eine Einrichtung zum Anzeigen eines Bildes hinter einem Linsenrasterschirm (20) aufweist, der von vertikalen, benachbarten Zylinderlinsen (22) mit nach vorn konvexem Diopter gebildet ist, wobei diese Linsen eine Brennebene und eine Medianebene (24) aufweisen, wobei das Bild in der genannten Brennebene ausgebildet wird, dadurch gekennzeichnet, daß das Bild ein Raster besitzt, das größer als das des Linsenrasterschirms ist.

16. Einrichtung nach Anspruch 15, dadurch gekennzeichnet, daß sie einen Anzeigeschirm (18) enthält, der in der Brennebene des Linsenrasterschirms (20) angeordnet ist.

17. Einrichtung nach Anspruch 16, dadurch gekennzeichnet, daß der Anzeigeschirm (18) von dem Linsenrasterschirm (20) getrennt ist und daß sie optische Einrichtungen (19, 21) zum Ausbilden eines Abbildes dieses Schirms in der Brennebene des Linsenrasterschirms (20) enthält.

18. Einrichtung nach Anspruch 15, dadurch gekennzeichnet, daß sie eine Aufnahmeeinrichtung mit wenigstens einer Kamera (CD, CG) enthält, die dazu eingerichtet ist, eine Aufnahme in mehreren Ansichten unter unterschiedlichen Winkeln durchzuführen, wobei jede Familie von Anzeigeelementen durch eines der Signale (SD, SG) gesteuert ist, das einer der Aufnahmen entspricht.

19. Einrichtung nach Anspruch 18, dadurch gekennzeichnet, daß die Aufnahmeeinrichtung zwei Kameras enthält, die in unterschiedlichen Richtungen ausgerichtet sind.

20. Einrichtung nach Anspruch 19, dadurch gekennzeichnet, daß sie einen ersten Empfänger (40') enthält, der über ein Fernübertragungsnetz mit einer ersten Aufnahmeeinrichtung verbunden ist, und einen zweiten Empfänger enthält, der über dasselbe Fernübertragungsnetz mit einer zweiten Aufnahmeeinrichtung verbunden ist, wobei die erste Aufnahmeeinrichtung dazu eingerichtet ist, zwei Aufnahmen unter zwei unterschiedlichen Winkeln beiderseits des zweiten Empfängers auszuführen, und die zweite Aufnahmeeinrichtung dazu eingerichtet ist, zwei Aufnahmen unter zwei unterschiedlichen Winkeln beiderseits des ersten Empfängers auszuführen.

21. Einrichtung nach Anspruch 20, dadurch gekennzeichnet, daß die ersten und zweiten Aufnahmeeinrichtungen jeweils von zwei Kameras (42'G, 42'D und 42"G, 42"D) gebildet sind, die den einen der Empfänger einrahmen.

22. Einrichtung nach einem der Ansprüche 18 bis 21, dadurch gekennzeichnet, daß die Aufnahmeeinrichtung von einem Multiplexer (10) gefolgt ist.

23. Einrichtung nach einem der Ansprüche 18 bis 22, dadurch gekennzeichnet, daß jede Kamera vom Feststoffmatrixabtastertyp ist.

24. Einrichtung nach einem der Ansprüche 18 bis 23, dadurch gekennzeichnet, daß die verschiedenen Kameras mit Einrichtungen versehen sind, die es erlauben, die Pegel der von ihnen gelieferten Signale anzugleichen.

25. Einrichtung nach Anspruch 15, dadurch gekennzeichnet, daß sie Informatikeinrichtungen (50) enthält, die dazu eingerichtet sind, Bilder zu berechnen und Steuersignale für den Matrixschirm zu erzeugen.

26. Einrichtung nach einem der Ansprüche 15 bis 25, dadurch gekennzeichnet, daß der Matrixschirm dazu eingerichtet ist, Halbtöne zu rekonstruieren.

27. Einrichtung nach einem der Ansprüche 15 bis 26, dadurch gekennzeichnet, daß der Matrixschirm ein Flüssigkristallschirm ist.

28. Einrichtung nach einem der Ansprüche 17 bis 27, dadurch gekennzeichnet, daß sie einen Diffusorschirm (23) in der Brennebene des Linsenrasterschirms enthält.

29. Einrichtung nach einem der Ansprüche 17 bis 28, dadurch gekennzeichnet, daß sie ein Amplitudenfilter (25) zwischen dem Schirm und dem Rasterschirm enthält, das von lichtundurchlässigen Bändern gebildet ist.

## Claims

1. Process for the display of animated relief images, in which an image is formed behind a lenticular raster formed of vertical cylindrical lenses having a convex forward curvature, said lenses being regularly ordered at a predetermined spacing, said raster having a focal plane in which the image is formed, said image comprising overlapping images and constituted by horizontal lines of display elements, the display elements corresponding to different overlapping images being placed side by side in an identicallyrepeating predetermined order, the display elements in different lines corresponding to a single one of the overlapping images being vertically aligned, the distance separating two consecutive display elements from the same line and belonging to the same one of the overlapping images, constituting the image spacing, characterized in that the image spacing is greater than the spacing of the lenticular raster.

2. Process according to claim 1, characterized in that the image formed behind the lenticular raster is obtained by means of a matrix screen disposed in the focal plane of the lenticular raster.

3. Process according to claim 1, characterized in that, to form the image in the focal plane of the raster, a first image is formed on a matrix screen separated from the raster, and said image is projected on the focal plane of the raster.

4. Process according to any one of claims 1 to 3, characterized in that a half-tone image is formed.

5. Process according to claim 1, characterized in that a multiple set of views is taken by means of at least one camera, the sets of views being effected from different angles, and in that the signals resulting from said set of viewsare transmitted, each of the overlapping images constituting the image being commanded by one of the transmitted signals.

6. Process according to claim 5, characterized in that the signals delivered by the image taking means are transmitted by time multiplexing.

7. Process according to claim 5, characterized in that the signals delivered by the image taking means are transmitted in encoded form, one of the signals being transmitted in complete manner, the others being transmitted by means of thedeviation they exhibitwith respect to the complete signal.

8. Process according to claim 5, characterized in that two sets of views are taken from two different angles.

9. Process according to claim 8, characterized in that the image is formed from two overlapping images.

10. Process according to claim 5, characterized in that the number of sets of views taken is less than the number of overlapping images forming the image, and that the complementary images are generated by combining the signals corresponding to the sets of images effected, and that the complementary images are displayed with the images corresponding to the sets of views effected.

11. Process according to any one of claims 5 to 10, characterized in that the signals of the sets of views are transmitted through a transmission network.

12. Process according to claim 11, characterized in that the transmission network is a switched network.

13. Process according to claim 11, characterized in that the transmission network is a broadcasting network.

14. Process according to claim 1, characterized in that the command signals of the images constituting the image are calculated by computer means (52, 54).

15. Apparatus for the display of animated relief images, for carrying out a process according to claim 1, said apparatus comprising at least one receiver having an image display means behind a lenticular raster (20) formed from juxtaposed vertical cylindrical lenses (22) having convex forward curvature, said lenses having a focal plane and a median plane (24), the image being formed in said focal plane, characterized in that the image has a spacing which is greater than that of the lenticular raster.

16. Apparatus according to claim 15, characterized in that it comprises a display screen (18) located in the focal plane of the lenticular raster (20).

17. Apparatus according to claim 16, characterized in that the display screen (18) is separated from the lenticular raster (20) and that it comprises optical means (19, 21) for forming an image of said screen in the focal plane of the lenticular raster (20).

18. Apparatus according to claim 15, characterized in that it comprises an image taking means having at least one camera (CD,CG) adapted to form a multiple set of views from different angles, each group of display elements being commanded by one of the signals (SD,SG) corresponding to one of the sets of views.

19. Apparatus according to claim 18, characterized in that the image taking means comprises two cameras oriented in two different directions.

20. Apparatus according to claim 19, characterized in that it comprises a first receiver (40') connected through a telecommunications network to a first image taking means, and a second receiver connected through the same telecommunications network to a second image taking means, the first image taking means being adapted to form two sets of views at two different angles on either side of the second receiver, and the second image taking means being adapted to form two sets of views at two different angles on either side of the first receiver.

21. Apparatus according to claim 20, characterized in that the first and second image taking means are each comprised of two cameras (42'G, 42'D and 42"G 42"D) framing one of the receivers.

22. Apparatus according to any one of claims 18 to 21, characterized in that the image taking means is succeeded by a multiplexer (10).

23. Apparatus according to any one of claims 18 to 22, characterized in that each camera is of the solid state matrix analyzing type.

24. Apparatus according to any one of claims 18 to 23, characterized in that the different cameras are equipped with means for equilibrating the levels of the signals which they deliver.

25. Apparatus according to claim 15, characterized in that it comprises computer means (50) adapted to calculate the images and to generate the command signals for the matrix screen.

26. Apparatus according to any one of claims 15 to 25, characterized in that the matrix screen is adapted to restore half tones.

27. Apparatus according to any one of claims 15 to 26, characterized in that the matrix screen is a liquid crystal screen.

28. Apparatus according to any one of claims 17 to 27, characterized in that it comprises a diffusing screen (23) in the focal plane of the lenticular raster.

29. Apparatus according to any one of claims 17 to 28, characterized in that it comprises an amplitude filter (25) formed of opaque bands between the screen and the raster.

# FIG.1

# FIG.2

# FIG.3

FIG.4

FIG.5

(a)

(b)

(c)

FIG.6

# FIG.7